# FASCICULE DE BREVET EUROPEEN

(11) **EP 0 743 160 B1**
(45) Date de publication et mention de la délivrance du brevet: **07.04.1999**
(21) Numéro de dépôt: 96401042.5
(22) Date de dépôt: 13.05.1996
(51) Int. Cl.: B29C 47/00, B29C 47/50, B29C 45/54

(54) **Installation de fabrication de pièces de structure en matière thermoplastique renforcée de fibres, notamment pour véhicule automobile**
Vorrichtung zur Herstellung von Gegenständen aus faserverstärktem, thermoplastischem Kunststoff für Kraftfahrzeuge
Apparatus for the manufacture of fiber reinforced thermoplastic articles for automobiles

(30) Priorité: 16.05.1995 FR 9505787
(43) Date de publication de la demande: 20.11.1996
(73) Titulaire: ECIA - EQUIPEMENTS ET COMPOSANTS POUR L'INDUSTRIE AUTOMOBILE, F-25400 Audincourt (FR)
(72) Inventeur: Ougier, Daniel, 25230 Seloncourt (FR); Dumazet, Philippe, 25200 Montbeliard (FR); Gropelier, Gérard, 25200 Montbeliard (FR)
(74) Mandataire: Habasque, Etienne Joel Jean-François

(56) Documents cités:
- EP-A- 0 423 676
- DE-A- 2 403 481
- FR-A- 2 124 315
- US-A- 3 453 356
- US-A- 5 401 154
- PATENT ABSTRACTS OF JAPAN vol. 7, no. 199 (M-240) [1344] , 3 Septembre 1983 & JP-A-58 098231 (TOYOTA JIDOSHA KOGYO K.K.), 11 Juin 1983,
- PATENT ABSTRACTS OF JAPAN vol. 12, no. 404 (M-757), 26 Octobre 1988 & JP-A-63 147615 (TAKASHIMAYA NITSUPATSU KOGYO K.K.), 20 Juin 1988,
- DATABASE WPI Week 8417 Derwent Publications Ltd., London, GB; AN 84-104808 XP002009977 & JP-A-59 048 126 (MATSUSHITA ELEC. IND. K.K.) , 19 Mars 1984
- PATENT ABSTRACTS OF JAPAN vol. 6, no. 146 (M-147), 5 Août 1982 & JP-A-57 066915 (SHOWA DENKO K.K.)

## Description

La présente invention concerne une installation de fabrication de pièces de structure en matière thermoplastique renforcée de fibres, notamment pour véhicules automobiles.

Les véhicules automobiles comportent de nombreuses pièces de structure de ce type entrant dans leur constitution.

Un exemple d'une telle pièce, est la pièce de support d'un ou de plusieurs groupes de ventilation disposés en regard du radiateur de refroidissement du liquide de refroidissement du moteur d'un véhicule.

Ces pièces de structure sont en général fabriquées chez des équipementiers automobiles à partir de plaques préformées chez un fournisseur de matériau, ces plaques étant préformées à partir d'un mélange de matière thermoplastique et de fibres de renfort.

Il est alors nécessaire aux équipementiers, de chauffer ces plaques, puis de les disposer dans un moule par exemple de compression, entre une matrice et un poinçon de celui-ci, pour former la pièce de structure lors de la fermeture de ce moule.

On conçoit cependant que ceci présente un certain nombre d'inconvénients en raison d'une part, de problèmes d'approvisionnement, de stockage et de manutention de ces plaques et d'autre part, du travail de celles-ci.

En effet, la livraison de telles plaques chez les équipementiers imposent à ceux-ci de prendre un certain nombre de dispositions concernant l'approvisionnement de ces plaques, leur stockage en nombre suffisant pour éviter tous problèmes de rupture de stock et leur manutention lors de leur livraison et de leur transfert vers les unités de transformation de celles-ci en pièces de structure.

Par ailleurs et bien que ces plaques soient chauffées avant leur introduction dans un moule et donc avant la formation des pièces, leur structure est telle que les possibilités de transformation de celles-ci sont relativement limitées.

Or, les pièces de structure de véhicules automobiles ont tendance à devenir de plus en plus complexes et à présenter en particulier des formes très spécifiques qu'il est extrêmement difficile voire impossible d'obtenir à partir d'une plaque chauffée de matière thermoplastique renforcée de fibres à l'aide notamment d'un moule de compression.

On sait qu'il existe également dans l'état de la technique, des moules d'injection pour la fabrication de telles pièces de structure pour véhicules automobiles.

Une pâte d'un mélange de matière thermoplastique renforcée de fibres est alors injectée sous pression dans un tel moule pour former les pièces.

Cependant, l'utilisation de tels moules nécessite l'implantation à proximité immédiate de ceux-ci, de moyens de production de la pâte du mélange de matière thermoplastique renforcée de fibres, ces moyens de production étant reliés aux moules à travers des moyens tels que des presses d'injection.

On conçoit également qu'une telle installation est extrêmement complexe à implanter, à mettre en oeuvre et à entretenir.

On connaît également par exemple des documents DE-A-38 43 342, et PATENT ABSTRACTS OF JAPAN, volume 6, n° 146 (M-147) du 5 août 1982 (et JP-A-57 066915), des installations de fabrication de pièces conformes au préambule de la revendication 1.

Cependant dans ces documents, les moyens d'accumulation et de stockage temporaire de pâte sont reliés à une buse d'introduction de pâte dans le moule par l'intermédiaire d'une canalisation souple.

Cette buse et éventuellement la canalisation sont portées par un robot permettant de déplacer celles-ci afin de suivre un plan de chargement de la pâte dans le moule.

On conçoit cependant que ce type d'installations présente un certain nombre d'inconvénients, notamment au niveau de sa flexibilité, de sa mise en oeuvre et de son entretien.

Le but de l'invention est donc de résoudre ces problèmes.

A cet effet, l'invention a pour objet une installation de fabrication de pièces de structure en matière thermoplastique renforcée de fibres, notamment pour véhicules automobiles, comportant :
- des moyens de production en continu d'une pâte d'un mélange de matière thermoplastique renforcée de fibres, recevant en entrée d'une part, la matière thermoplastique et d'autre part, les fibres de renfort;
- des moyens d'accumulation et de stockage temporaire de pâte produite; et
- des moyens de prélèvement de pâte dans les moyens d'accumulation et de stockage temporaire et d'introduction de cette pâte prélevée, dans un moule de formation de la pièce,
   caractérisée en ce que les moyens de prélèvement et d'introduction de pâte comprennent des moyens thermorégulés en forme de seringue, comportant au moins un orifice de chargement/déchargement de pâte, portés par des moyens de manutention et déplaçables entre une première position de chargement de pâte, dans laquelle l'orifice de chargement/déchargement de pâte des moyens en forme de seringue est en regard de la sortie des moyens d'accumulation et de stockage temporaire de pâte, pour permettre le transfert de la pâte de ces moyens d'accumulation et de stockage temporaire dans les moyens en forme de seringue et une seconde position d'introduction de la pâte chargée, dans le moule de formation de la pièce.

Avantageusement, les moyens de production en continu de la pâte comprennent une machine d'extrusion thermorégulée recevant à une première entrée, la matière thermoplastique et à une seconde entrée, les fibres de renfort.

Selon un premier mode de réalisation, les moyens d'accumulation et de stockage temporaire de pâte produite, sont formés par une zone d'extrémité de sortie de pâte de ces moyens de production.

Selon un second mode de réalisation, les moyens d'accumulation et de stockage temporaire de pâte sont formés par des moyens thermorégulés formant réservoir de stockage de pâte, disposés à l'extrémité de sortie des moyens de production de pâte et dont l'entrée est raccordée à la sortie de ces moyens de production et dont la sortie comporte des moyens d'obturation raccordés à des moyens de commande de ceux-ci, à l'ouverture et à la fermeture.

On notera que le moule peut être un moule d'injection dans lequel est injectée la pâte ou un moule de compression comportant une matrice sur laquelle est déposée la pâte sous la forme d'un cordon et un poinçon correspondant.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant un exemple de réalisation d'une installation de fabrication de pièces de structure de véhicules automobiles;
- la Fig.2 représente une vue en coupe illustrant un exemple de réalisation de moyens d'accumulation et de stockage temporaire de pâte et de moyens de prélèvement et d'introduction de cette pâte, entrant dans la constitution d'une telle installation;
- la Fig.3 représente un schéma synoptique illustrant la structure et le fonctionnement de moyens de manutention de moyens de prélèvement et d'introduction, entrant dans la constitution d'une telle installation;
- la Fig.4 représente une vue de dessus d'une matrice d'un moule de compression entrant dans la constitution d'une telle installation;
- la Fig.5 représente une vue en coupe schématique d'une matrice d'un moule de compression entrant dans la constitution d'une telle installation; et
- la Fig.6 représente un schéma synoptique d'un exemple de réalisation de moyens de commande des différents moyens entrant dans le constitution d'une telle installation.

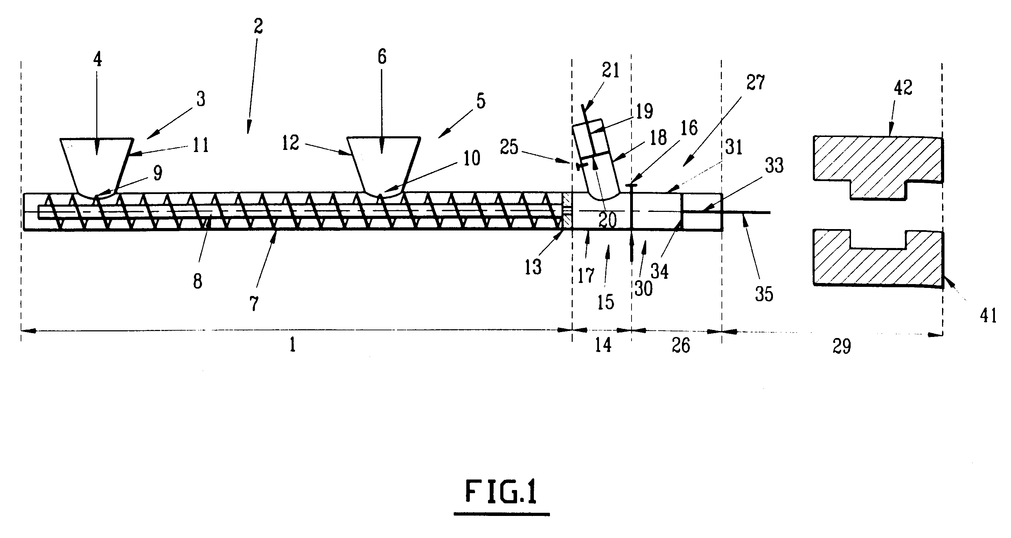

On a représenté sur la figure 1, un schéma synoptique illustrant la structure générale d'un exemple de réalisation d'une installation de fabrication de pièces de structure en matière thermoplastique renforcée de fibres, notamment pour véhicules automobiles.

Cette installation de fabrication comporte des moyens de production en continu d'une pâte d'un mélange de matière thermoplastique renforcée de fibres, désignés par la référence générale 1 sur cette figure.

Ces moyens de production en continu de pâte comprennent par exemple une machine d'extrusion thermorégulée, désignée par la référence générale 2, recevant à une première entrée désignée par la référence générale 3, la matière thermoplastique 4 et à une seconde entrée désignée par la référence générale 5, les fibres de renfort 6.

Cette machine d'extrusion comporte de façon classique un fourreau de forme allongée 7, dans lequel sont disposées au moins deux vis d'extrusion dont une seule par exemple 8 est représentée, parallèles et imbriquées, associées à des moyens d'entraînement en rotation (non représentés).

Ce fourreau comporte alors des orifices 9,10 d'introduction de la matière thermoplastique et des fibres de renfort. Ces orifices sont associés par exemple à des trémies d'alimentation respectivement 11 et 12.

Des moyens de chauffage sont associés à ce fourreau pour réguler de façon classique la température des différentes portions de la machine.

La matière thermoplastique peut par exemple être du polypropylène, tandis que les fibres de renfort peuvent être des fibres minérales telles que des fibres de verre ou organiques ou naturelles telles que des fibres de bois, de lin ou de chanvre.

De façon classique, la vitesse de rotation des vis 8 de cette machine d'extrusion et la température des différentes portions de celle-ci sont réglées pour permettre une fusion rapide de la matière thermoplastique introduite dans cette machine d'extrusion par exemple sous la forme de poudre ou de granulés, puis l'introduction dans celle-ci, des fibres de renfort lorsque la matière thermoplastique est en phase fondue, afin d'obtenir un mélange intime et homogène de cette matière thermoplastique et de ces fibres de renfort en sortie de cette machine d'extrusion.

On conçoit bien entendu que la température des différentes portions de cette machine d'extrusion et la vitesse de rotation des vis de celle-ci doivent être adaptées à la matière thermoplastique et aux fibres de renfort utilisées.

C'est ainsi par exemple que dans le cas de la production en continu d'une pâte d'un mélange polypropylène/fibres de verre, la vitesse de rotation des vis peut être comprise entre 50 et 150 t/mm et est de préférence égale à environ 100 t/mn.

La température de la zone de cette machine d'extrusion dans laquelle est introduite la matière thermoplastique, peut être de l'ordre de 180°C, la température du fourreau de cette machine croissant de cette zone d'introduction de matière thermoplastique, jusqu'à la zone d'introduction des fibres de renfort et passant par exemple à environ 250°C, pour ensuite se stabiliser ou décroître légèrement en sortie de cette machine d'extrusion par exemple à environ 240°C.

Cette machine d'extrusion comporte alors trois portions présentant des températures différentes, une première portion s'étendant entre la zone d'introduction de la matière thermoplastique et la zone d'introduction des fibres de renfort, et étant une zone de chauffage et de convoyage de cette matière, pouvant par exemple présenter une longueur de 550 mm, une seconde portion, s'étendant en regard de la zone d'introduction des fibres de renfort, permettant un mélange de ces fibres et de la matière thermoplastique et présentant par exemple une longueur de 50 mm et une troisième portion, de convoyage du mélange de matière thermoplastique et des fibres vers la sortie de cette machine d'extrusion, présentant par exemple une longueur de 600 mm.

Il va de soi bien entendu que des températures différentes, des vitesses de rotation différentes et des profils différents des vis de cette machine d'extrusion peuvent être utilisés en fonction de la nature de la matière thermoplastique et des fibres de renfort.

C'est ainsi par exemple que dans le cas où l'on utilise des fibres de renfort naturelles, les températures des différentes portions de la machine d'extrusion sont légèrement inférieures à celles indiquées précédemment, tandis que la vitesse de rotation des vis de celle-ci peut par exemple être de l'ordre de 300 t/mn.

Dans le cas de l'utilisation de ces fibres naturelles, des profils de vis plus complexes que ceux évoqués précédemment sont également nécessaires pour obtenir un bon mélange de la matière thermoplastique et des fibres.

Cette machine peut également être équipée de moyens de dégazage de type classique.

On conçoit alors que ces moyens de production en continu permettent d'obtenir une pâte d'un mélange de matière thermoplastique renforcée de fibres à partir d'une part de matière thermoplastique et d'autre part de fibres de renfort.

Cette pâte passe ensuite par exemple dans une filière de sortie 13 de cette machine d'extrusion pour entrer sous la forme d'un boudin de pâte dans des moyens d'accumulation et de stockage temporaire de cette pâte, ces moyens étant désignés par la référence générale 14 sur cette figure 1.

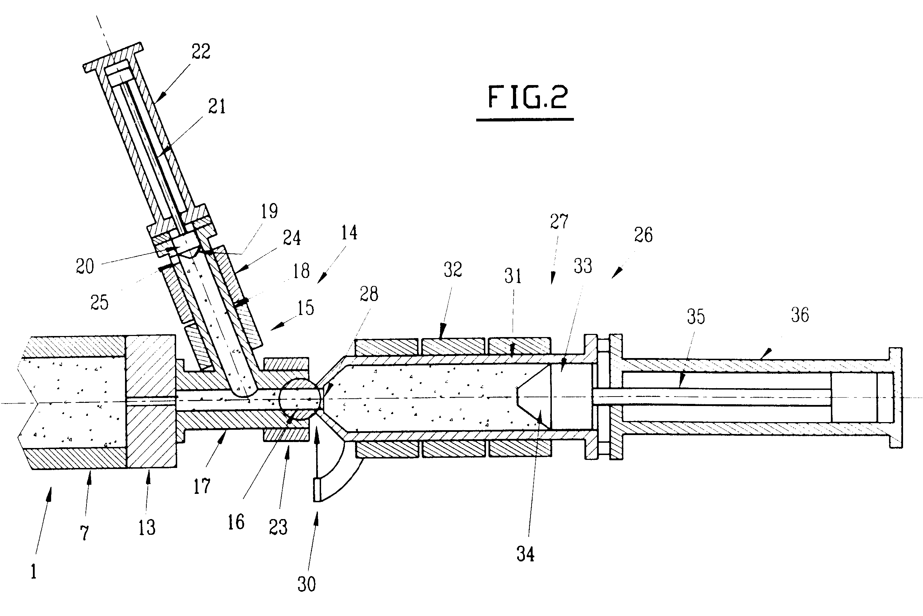

Comme on peut le voir sur cette figure 1 et plus clairement sur la figure 2, ces moyens d'accumulation et de stockage temporaire de pâte 14, peuvent comporter, selon un mode de réalisation, des moyens thermorégulés formant réservoir de stockage 15, disposés à l'extrémité de sortie des moyens de production et par exemple à la sortie de la filière 13 de la machine d'extrusion, dont l'entrée est raccordée à la sortie de ces moyens de production et dont la sortie comporte des moyens d'obturation 16, raccordés à des moyens de commande de ceux-ci à l'ouverture et à la fermeture, comme cela sera décrit plus en détail par la suite.

Dans l'exemple de réalisation représenté sur ces figures, ces moyens formant réservoir 15 de stockage de pâte comportent une première partie de réservoir par exemple cylindrique, désignée par la référence générale 17, s'étendant dans le prolongement des moyens de production et comportant une première extrémité formant l'entrée de ceux-ci raccordée aux moyens de production 1 et une seconde extrémité formant la sortie de ceux-ci munie des moyens d'obturation 16 et une seconde partie de réservoir par exemple cylindrique, désignée par la référence générale 18 s'étendant latéralement à partir de la première, et dans laquelle sont disposés des moyens de compactage/éjection de pâte.

Ces moyens de compactage/éjection de pâte sont désignés par la référence générale 19 sur ces figures.

En fait, ces moyens de compactage/éjection de pâte peuvent comporter un piston 20 monté déplaçable dans cette seconde partie de réservoir 18, ce piston comportant une tige 21 associée à des moyens de contrôle du déplacement de celui-ci dans cette seconde partie de réservoir 18.

Ces moyens de contrôle sont désignés par la référence générale 22 sur la figure 2 et sont par exemple constitués par un organe de type vérin hydraulique ou pneumatique dont la tige de sortie est associée à la tige 21 du piston 20 disposé dans la seconde partie de réservoir 18.

Le fonctionnement de ces moyens de compactage/éjection est piloté par des moyens de commande associés à des capteurs de position du piston dans la seconde partie de réservoir 18, qui seront décrits plus en détail par la suite, pour permettre deux modes de fonctionnement de ce piston.

En effet, selon un premier mode de fonctionnement, lors de l'accumulation de pâte dans les moyens d'accumulation et de stockage temporaire 14, les moyens d'obturation 16 étant fermés, ces moyens de contrôle du déplacement du piston se comportent comme des moyens de freinage du déplacement dans un sens de ce piston 20, c'est-à-dire lorsque celui-ci remonte par exemple dans la seconde partie de réservoir correspondante 18, pour obtenir une certaine compression de la pâte à l'intérieur de ces moyens formant réservoir, cette pâte étant délivrée en continu par les moyens de production 1.

Lorsque le piston 20 a atteint une position haute dans la seconde partie de réservoir 18 de ces moyens, ceux-ci étant alors pleins, les moyens de contrôle se comportent alors comme des moyens de déplacement de ce piston 20 dans l'autre sens, afin de faire descendre le piston 20 dans la partie de réservoir correspondante 18, pour l'éjection de la pâte hors de ces moyens d'accumulation et de stockage temporaire ,comme cela sera décrit plus en détail par la suite.

Des moyens de chauffage respectivement 23 et 24 peuvent être disposés autour de chacune des parties 17 et 18 de ces moyens formant réservoir 15, pour réguler la température de celles-ci et donc de la pâte contenue dans celles-ci.

Ces moyens de chauffage comprennent par exemple des résistances électriques dont l'alimentation est commandée pour assurer une régulation de température de façon classique.

On notera que ces moyens d'accumulation et de stockage temporaire peuvent également comporter une soupape de trop-plein de type classique, cette soupape étant prévue par exemple sur la seconde partie de réservoir désignée par la référence générale 18 et cette soupape de trop-plein étant désignée par la référence 25 sur ces figures 1 et 2.

Ceci permet d'évacuer le trop-plein de pâte de matière thermoplastique renforcée de fibres en cas de mauvais fonctionnement de l'installation.

Ainsi qu'on l'a indiqué précédemment, la sortie de ces moyens formant réservoir 15 comporte des moyens d'obturation 16.

Ces moyens d'obturation 16 peuvent présenter n'importe quelle structure appropriée et peuvent par exemple être formés par un organe se présentant sous la forme d'un robinet, d'une vanne quelconque ou encore d'un obturateur à guillotine, etc..., dont les déplacements sont pilotés par des moyens de commande.

L'installation de fabrication comporte également des moyens de prélèvement de pâte dans ces moyens d'accumulation et de stockage temporaire et d'introduction de cette pâte prélevée dans un moule de formation de la pièce de structure.

Ces moyens de prélèvement et d'introduction de pâte sont désignés par la référence générale 26 sur ces figures.

En fait et comme on peut le voir plus clairement sur la figure 2, ces moyens de prélèvement et d'introduction de pâte peuvent comporter des moyens thermorégulés en forme de seringue, désignés par la référence générale 27, comportant au moins un orifice de chargement/déchargement de pâte, désigné par la référence générale 28, portés par des moyens de manutention qui seront décrits plus en détail par la suite, et déplaçables entre une première position de chargement de pâte, représentée sur ces figures 1 et 2, dans laquelle l'orifice de chargement/déchargement de pâte 28 des moyens en forme de seringue 27 est en regard de la sortie des moyens d'accumulation et de stockage temporaire de pâte, pour permettre un transfert de pâte de ces moyens d'accumulation et de stockage temporaire dans les moyens en forme de seringue, et une seconde position d'introduction de la pâte chargée dans ces moyens, dans un moule de formation de la pièce, ce moule étant par exemple désigné par la référence générale 29 sur la figure 1.

Comme cela est visible sur la figure 2, l'orifice de chargement/déchargement de pâte 28 de ces moyens en forme de seringue 27, est avantageusement associé à des moyens d'obturation 30 formés par exemple par un volet déplaçable entre une position active et une position escamotée devant cet orifice pour à la fois obturer celui-ci et couper le cordon de pâte délivré par la sortie des moyens d'accumulation et de stockage temporaire.

D'autres modes de réalisation de ces moyens d'obturation 30 peuvent bien entendu être envisagés.

Le fonctionnement de ces moyens d'obturation 30 est également piloté à l'ouverture et à la fermeture par des moyens de commande qui seront décrits plus en détail par la suite.

En fait, les moyens en forme de seringue peuvent comporter un corps de seringue désigné par la référence générale 31 sur ces figures, dont une extrémité comporte l'orifice 28 de chargement/déchargement et autour duquel sont disposés des moyens de chauffage 32.

Ces moyens de chauffage peuvent également être formés par des résistances électriques dont l'alimentation est contrôlée par des moyens de commande pour obtenir une régulation de température de façon classique.

De plus, des moyens de compactage/éjection de pâte sont disposés dans ce corps de seringue 31, ces moyens étant désignés par la référence générale 33 sur ces figures.

Ces moyens de compactage/éjection de pâte peuvent également comporter un piston 34 monté déplaçable dans le corps de seringue, ce piston comportant une tige 35 associée à des moyens de contrôle du déplacement de celui-ci, dans le corps de seringue 31, désignés par la référence générale 36 sur la figure 2.

Ces moyens de contrôle forment également des moyens de freinage du déplacement dans un sens du piston 34 lors du chargement de pâte dans les moyens en forme de seringue, c'est-à-dire lors du recul du piston dans ce corps, pour obtenir une certaine compression de la pâte dans ces moyens et des moyens de déplacement de ce piston 34 dans l'autre sens, c'est-à-dire vers l'extrémité avant de ces moyens munie de l'orifice 28, pour le déchargement de la pâte hors de ces moyens.

Comme cela sera décrit plus en détail par la suite, ces moyens de contrôle sont également associés à des capteurs de position du piston 34 dans le corps de seringue 31 et à des moyens de commande de leur fonctionnement.

Dans l'exemple illustré sur cette figure 2, ces moyens de contrôle comportent également un organe de type vérin par exemple hydraulique ou pneumatique, dont la tige de sortie est associée à la tige 35 du piston 34 disposé dans le corps de seringue 31.

On conçoit alors que ces moyens en forme de seringue permettent de prélever une quantité déterminée de pâte dans les moyens d'accumulation et de stockage temporaire 14 lorsque les moyens d'obturation respectivement 16, de la sortie de ces moyens d'accumulation et de stockage temporaire 14 et 30, de l'orifice 28 de chargement/déchargement de ces moyens de prélèvement 26, sont ouverts.

L'éjection de pâte de ces moyens d'accumulation et de stockage temporaire 14 grâce notamment au piston 20 de ceux-ci permet le chargement de pâte dans les moyens de prélèvement.

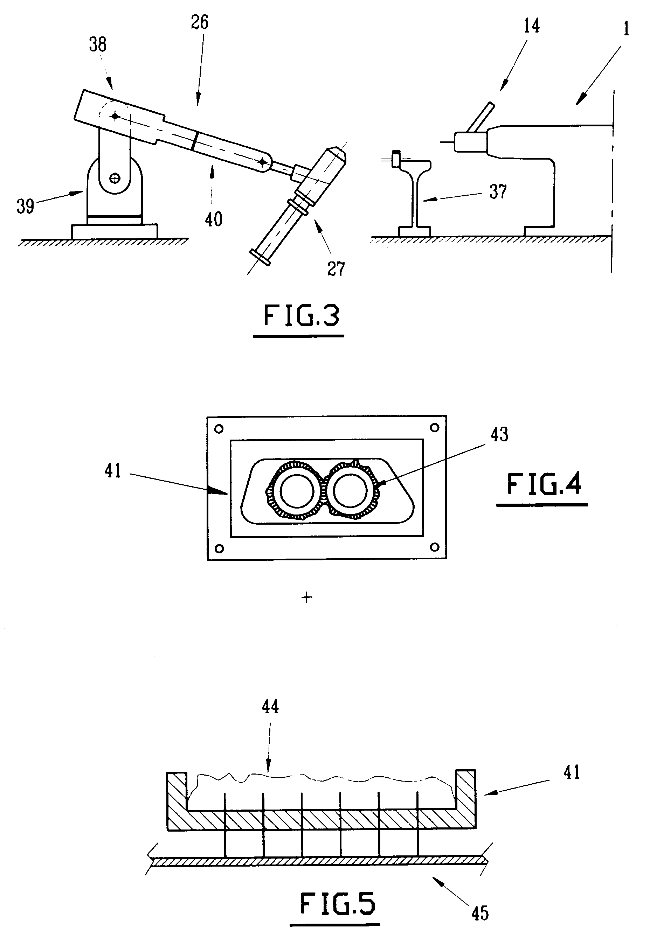

Ces moyens de prélèvement, et plus particulièrement les moyens en forme de seringue 27 de ceux-ci, sont par exemple disposés, comme on peut le voir sur la figure 3, dans l'alignement de la machine d'extrusion et des moyens d'accumulation et de stockage, sur un support de centrage 37 de ceux-ci de manière que l'orifice de chargement/déchargement 28 de ceux-ci soit en regard de la sortie des moyens d'accumulation et de stockage.

Les moyens en forme de seringue 27 sont associés comme cela est indiqué précédemment à des moyens de manutention permettant de les déplacer entre cette position de chargement et une position de déchargement de la pâte dans le moule.

A cet effet, ces moyens de manutention comprennent par exemple comme on peut le voir sur la figure 3, un robot de manutention de type classique désigné par la référence générale 38, comportant par exemple un socle fixe 39 sur lequel est monté mobile un bras de déplacement 40 à l'extrémité duquel sont fixés les moyens en forme de seringue 27.

Le fonctionnement de ce robot 38 est piloté par des moyens de commande qui seront décrits plus en détail par la suite, pour déplacer ces moyens en forme de seringue 27 entre la position de chargement décrite précédemment, et la position de déchargement et d'introduction de la pâte chargée, dans le moule.

Comme cela a été décrit en regard de la figure 1, le moule peut être un moule de compression 29 comportant de façon classique une matrice 41 sur laquelle peut être disposé un poinçon correspondant 42 pour former la pièce de structure.

On conçoit alors que les déplacements du bras 40 du robot de manutention 38 peuvent être commandés de manière que l'extrémité de celui-ci et donc les moyens en forme de seringue 27, suivent un trajet prédéterminé sur la matrice 41 pour déposer un cordon de pâte régulièrement sur cette matrice, par activation des moyens de déplacement 36 du piston 34 de ces moyens afin d'éjecter la pâte hors de ceux-ci.

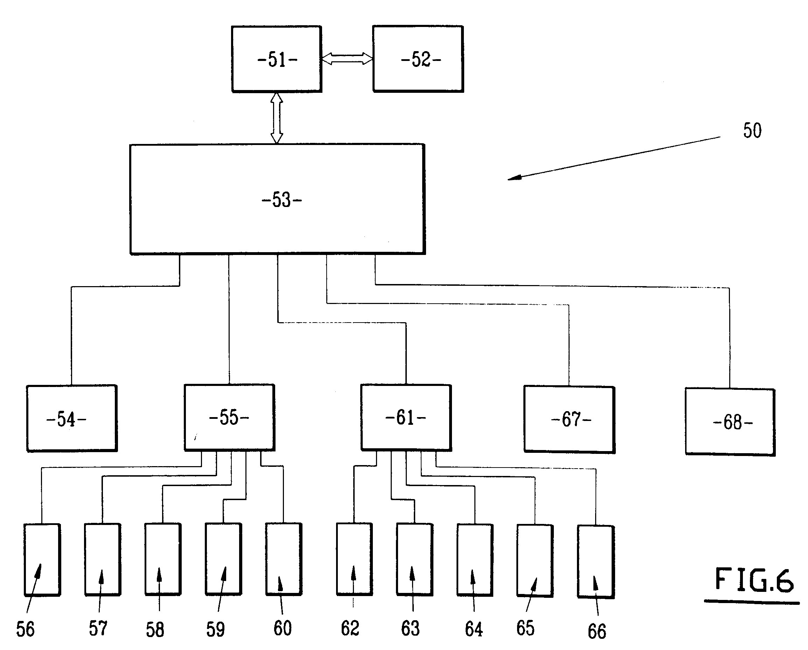

Ce cordon est par exemple désigné par la référence générale 43 sur les figures 4 et 5.

Ce dépôt de pâte permet donc de créer un plan de chargement du moule qui est adaptable à sa géométrie et qui conditionne notamment les propriétés finales, par exemple de résistance mécanique, des pièces obtenues.

On notera bien entendu que le moule peut également être un moule de fabrication de pièces par injection de matière thermoplastique dans celui-ci.

Dans le cas où le moule est un moule de compression tel que celui décrit en regard des figures 4 et 5, la matrice 41 de celui-ci peut comporter des moyens d'immobilisation du cordon de pâte déposé.

Ces moyens d'immobilisation sont par exemple désignés par la référence générale 44 sur la figure 5 et peuvent être déplaçables entre une position active d'immobilisation du cordon de pâte, dans laquelle ils font saillie au-dessus de la surface de la matrice 41 et une position escamotée dans celle-ci, une fois que le cordon de pâte a été déposé.

Ces moyens d'immobilisation 44 peuvent en fait comporter des aiguilles traversant des trous correspondants de la matrice 41 du moule, ces aiguilles étant fixées sur une plaque de support 45, déplaçable par exemple par un organe de type vérin, entre une position haute dans laquelle les aiguilles s'étendent au-dessus de la surface de la matrice et une position basse, dans laquelle les aiguilles sont escamotées dans la matrice 41, sous le contrôle de moyens de commande, lors de la fermeture du moule, c'est-à-dire de l'application du poinçon 42 sur la matrice 41.

Il a en effet été constaté que lors des déplacements du bras 40 du robot 38 de manutention et donc des moyens en forme de seringue 27 le long d'un trajet prédéterminé sur cette matrice, le cordon de pâte déposé avait tendance à se déplacer, en glissant sur la surface de cette matrice, ce qui pouvait poser des problèmes lors de la formation de la pièce.

Ces moyens d'immobilisation comprenant par exemple des aiguilles permettent d'immobiliser ce cordon de pâte en position afin d'obtenir une formation ultérieure correcte de la pièce lors de la fermeture du moule.

On notera que les différentes parties de l'installation qui viennent d'être décrites, c'est-à-dire les moyens de production en continu de la pâte du mélange de matière thermoplastique renforcée de fibres, les moyens d'accumulation et de stockage temporaire de cette pâte, et les moyens de prélèvement et d'introduction de cette pâte dans le moule peuvent fonctionner sous une atmosphère contrôlée par exemple de gaz inerte, tel que de l'azote, pour éviter tous problèmes de dégradation et en particulier d'oxydation du mélange de matière thermoplastique et de fibres.

Des moyens permettant par exemple d'injecter un tel gaz dans les différents moyens de l'installation décrite sont bien connus dans l'état de la technique, de sorte que l'on ne les décrira pas dans le détail par la suite.

Le fonctionnement de cette installation peut être contrôlé par une ou plusieurs unités centrales de traitement d'informations à base de calculateurs, comme celle désignée par la référence générale 50 sur la figure 6.

Cette unité 50 comporte alors par exemple un calculateur central 51 associé à des moyens de mémorisation d'informations 52 et à des moyens d'interface 53 permettant le raccordement de cette unité centrale de traitement d'informations aux différentes parties de cette installation.

C'est ainsi par exemple que cette unité peut être reliée par les moyens d'interface 53 à des moyens de commande 54 des moyens 1 de production en continu de la pâte, pour contrôler les différents paramètres de fonctionnement de ceux-ci et plus particulièrement de la machine d'extrusion de ceux-ci.

Ces paramètres sont par exemple les paramètres concernant l'alimentation en produits de base de cette machine, la vitesse de rotation des vis, la température des différentes portions de celle-ci, etc...

Ces moyens d'interface 53 sont également reliés à des moyens 55 de commande du fonctionnement des moyens 14 d'accumulation et de stockage temporaire de la pâte produite.

Ainsi qu'on l'a indiqué précédemment, ces moyens de commande comprennent des capteurs 56 et 57 de position du piston 20 dans la seconde partie de réservoir 18 de ces moyens.

Ces moyens d'accumulation et de stockage 14 comprennent également des moyens de commande du fonctionnement du vérin 22 de ceux-ci, ces moyens de commande étant désignés par la référence générale 58 sur cette figure 6 et des moyens de commande du fonctionnement des moyens d'obturation 16 de la sortie de ces moyens d'accumulation et de stockage temporaire, ces moyens de commande étant désignés par la référence générale 59 sur cette figure 6.

De plus, ces moyens d'accumulation et de stockage temporaire sont également associés à des moyens 60 de régulation de la température des deux parties de ceux-ci par contrôle de l'alimentation par exemple des résistances électriques 23 et 24.

Les moyens d'interface 53 sont également reliés à des moyens de commande 61 des moyens 26 de prélèvement et d'introduction de pâte qui présentent une structure similaire, c'est à dire qu'ils comportent des moyens 62 de commande des moyens de chauffage 32 du corps de seringue 31, des capteurs 63 et 64 de position du piston 34 à l'intérieur de ce corps de seringue, des moyens de commande 65 du fonctionnement des moyens d'obturation 30 de l'orifice de chargement/déchargement 28 de celui-ci et des moyens 66 de commande du fonctionnement du vérin 36 de ces moyens.

Ces moyens d'interface 53 sont également reliés à des moyens 67 de contrôle du fonctionnement du robot de manutention 38 décrit précédemment et à des moyens 68 de contrôle du fonctionnement du moule 29 et des moyens d'immobilisation 44 de celui-ci.

On conçoit alors que le fonctionnement de cette installation est le suivant.

La machine d'extrusion 2 étant en fonctionnement, de la matière thermoplastique 4 est introduite dans l'orifice 9 de celle-ci.

Les vis de cette machine d'extrusion entraînent alors cette matière thermoplastique en direction de la zone d'introduction des fibres de renfort 6 par l'orifice 10 du fourreau de celle-ci. Au cours de ce déplacement, la matière thermoplastique est chauffée et fondue, de sorte que lorsque des fibres de renfort sont introduites dans la machine d'extrusion, ces fibres se mélangent intimement à la matière thermoplastique en phase fondue. Ce mélange de matière thermoplastique renforcée de fibres, est alors convoyé par les vis jusqu'à la filière de sortie 13 de cette machine.

Les moyens d'obturation 16 des moyens 14 d'accumulation et de stockage temporaire de pâte produite sont fermés et le piston 20 de ces moyens est initialement en position basse dans la seconde partie de réservoir correspondante 18.

L'accumulation de pâte dans ces moyens d'accumulation et de stockage temporaire provoque, du fait de la fermeture des moyens d'obturation 16, le remplissage de la première et de la seconde parties 17 et 18 de réservoir de ces moyens en repoussant le piston 20 dans la seconde partie de réservoir 18 de ces moyens, celui-ci remontant alors jusqu'à une position haute dans laquelle ce piston actionne le capteur de position correspondant.

Lors de cette phase d'accumulation de pâte, le déplacement de ce piston 20 est freiné par le vérin 22 pour comprimer légèrement la pâte.

Pendant ce temps, le robot 38 a placé des moyens en forme de seringue 27 vides en face de la sortie de ces moyens d'accumulation et de stockage temporaire 14. Les moyens d'obturation 30 de l'orifice de chargement/déchargement 28 de ces moyens sont en position ouverte et le piston 34 de ces moyens est situé à proximité de cet orifice, c'est à dire à proximité de l'extrémité avant de ces moyens.

L'unité centrale provoque alors d'une part, l'ouverture des moyens d'obturation 16 des moyens d'accumulation et de stockage temporaire 14 et d'autre part, le déplacement du piston 20 dans la seconde partie de réservoir 18 des moyens d'accumulation et de stockage temporaire de pâte, de manière à provoquer sa descente et donc l'éjection de la pâte hors de ces moyens d'accumulation et de stockage temporaire dans les moyens en forme de seringue 27, le piston 34 de ceux-ci se déplaçant en reculant dans le corps de seringue sous l'effet de cette introduction de pâte pour comprimer légèrement la pâte.

On notera que durant le transfert de pâte des moyens formant réservoir dans les moyens en forme de seringue, la pâte stockée dans la seconde partie de réservoir est poussée à une vitesse déterminée par le piston correspondant pour obtenir son mélange avec la pâte issue directement de la machine d'extrusion.

Une fois les moyens en forme de seringue pleins, le piston 34 est en position arrière à l'intérieur du corps de seringue et actionne le capteur de position correspondant, de sorte que l'unité centrale de traitement arrête l'activation du vérin 22 et provoque la fermeture des moyens d'obturation 16, des moyens d'accumulation et de stockage temporaire de pâte 14 et des moyens d'obturation 30 de l'orifice 28 correspondant des moyens en forme de seringue 27.

On conçoit alors que les moyens d'accumulation et de stockage temporaire de pâte, et plus particulièrement la seconde partie de réservoir 18 de ceux-ci, sont vides et peuvent à nouveau recevoir une quantité déterminée de pâte produite en continu par la machine d'extrusion.

Pendant ce temps, le robot 38 est piloté par l'unité centrale de manière à déplacer les moyens en forme de seringue 27, de leur position de chargement vers une position de déchargement de la pâte contenue dans le corps de seringue, par exemple sur la matrice 41 du moule de compression 29.

A cet effet, l'unité centrale pilote à l'ouverture les moyens d'obturation 30 de l'orifice 28 de chargement/déchargement et commande le vérin 36 de manière que celui-ci déplace le piston 34 dans le corps de seringue afin d'éjecter la pâte hors de ce corps, tout en déplaçant ce corps par l'intermédiaire du bras du robot 38 selon un trajet déterminé sur cette matrice 41 afin d'obtenir une bonne répartition d'un cordon de pâte sur celle-ci, les moyens 44 d'immobilisation du cordon de pâte étant en position active sur la matrice, cette répartition étant adaptable en fonction de la géométrie du moule.

Une fois ce dépôt de pâte réalisé, l'unité centrale pilote l'escamotage de ces moyens d'immobilisation 44 et la fermeture du moule 29, c'est-à-dire l'application du poinçon 42 de celui-ci contre la matrice 41 afin de former la pièce.

Pendant ce temps, le robot 38 déplace les moyens en forme de seringue 27 en direction de leur position de chargement pour un nouveau cycle de prélèvement de pâte dans les moyens d'accumulation et de stockage temporaire de pâte 14 qui se sont remplis pendant ce temps.

Un nouveau cycle de fonctionnement peut alors débuter.

On notera que pendant toutes ces opérations, la température des différentes portions des moyens de production, des moyens d'accumulation et de stockage temporaire de pâte et des moyens de prélèvement et d'introduction de pâte, est contrôlée par cette unité centrale, de même que l'atmosphère de gaz inerte éventuellement présente dans ces différents moyens.

On a indiqué précédemment que le moule pouvait également être un moule de fabrication de pièces par injection de matière thermoplastique renforcée de fibres dans celui-ci.

Dans ce cas, le robot de manutention 38 est adapté pour placer les moyens en forme de seringue 27, en face d'un orifice d'introduction de matière thermoplastique renforcée de fibres, dans ce moule et pour injecter sous pression, ce mélange dans ce moule afin d'obtenir la pièce.

Il va de soi bien entendu que plusieurs moyens en forme de seringue peuvent être utilisés successivement en association avec un ou plusieurs robots de manutention de ceux-ci.

C'est ainsi par exemple que l'un de ces moyens en forme de seringue peut être en position de chargement de pâte, à la sortie des moyens d'accumulation et de stockage de pâte, tandis qu'un autre est en position de déchargement de pâte dans un moule correspondant, ce qui permet d'améliorer les cadences de production, par un chargement en temps masqué de l'un de ces moyens par rapport à l'autre.

Il va de soi bien entendu que différents modes de réalisation de cette installation peuvent être envisagés et que différents perfectionnements peuvent apportés à celle-ci.

Ainsi par exemple et selon un autre mode de réalisation, les moyens d'accumulation et de stockage temporaire de pâte peuvent être ménagés directement dans la zone d'extrémité de sortie de pâte des moyens de production et en particulier de la machine d'extrusion.

Par ailleurs, différentes formes de réalisation des moyens d'accumulation et de stockage temporaire de pâte et des moyens de prélèvement et d'introduction de cette pâte peuvent également être envisagés.

Bien entendu, des moyens de commande différents de ceux décrits en regard de la figure 6, peuvent également être envisagés.

## Revendications

1. Installation de fabrication de pièces de structure en matière thermoplastique renforcée de fibres, notamment pour véhicules automobiles, comportant :
- des moyens (1) de production en continu d'une pâte d'un mélange de matière thermoplastique renforcée de fibres, recevant en entrée d'une part, la matière thermoplastique (4) et d'autre part, les fibres de renfort (6);
- des moyens (14) d'accumulation et de stockage temporaire de pâte produite; et
- des moyens (26) de prélèvement de pâte dans les moyens d'accumulation et de stockage temporaire (14) et d'introduction de cette pâte prélevée, dans un moule (29) de formation de la pièce,
caractérisée en ce que les moyens (26) de prélèvement et d'introduction de pâte comprennent des moyens thermorégulés en forme de seringue (27) comportant au moins un orifice de chargement/déchargement (28) de pâte, portés par des moyens de manutention (38) et déplaçables entre une première position de chargement de pâte, dans laquelle l'orifice de chargement/déchargement (28) de pâte des moyens en forme de seringue (27) est en regard de la sortie des moyens (14) d'accumulation et de stockage temporaire de pâte, pour permettre le transfert de la pâte de ces moyens d'accumulation et de stockage temporaire (14) dans les moyens en forme de seringue (27) et une seconde position d'introduction de la pâte chargée dans ces moyens, dans le moule (29) de formation de la pièce.

2. Installation selon la revendication 1, caractérisée en ce que les moyens (1) de production en continu de la pâte comprennent une machine d'extrusion thermorégulée (2), recevant à une première entrée (3), la matière thermoplastique et à une seconde entrée (5), les fibres de renfort.

3. Installation selon la revendication 2, caractérisée en ce que la machine d'extrusion (2) comporte un fourreau (7) de forme allongée, dans lequel sont disposées au moins deux vis parallèles et imbriquées (8) associées à des moyens d'entraînement en rotation, le fourreau comportant des orifices (9,10) d'introduction de la matière thermoplastique et des fibres de renfort, associés à des trémies d'alimentation (11,12).

4. Installation selon la revendication 2 ou 3, caractérisée en ce que la machine d'extrusion (2) comporte des moyens de dégazage.

5. Installation selon l'une quelconque des revendications précédentes, caractérisée en ce que la matière thermoplastique est du polypropylène.

6. Installation selon l'une quelconque des revendications précédentes, caractérisée en ce que les fibres de renfort sont des fibres minérales.

7. Installation selon l'une quelconque des revendications 1 à 5, caractérisée en ce que les fibres de renfort sont des fibres organiques.

8. Installation selon l'une quelconque des revendications précédentes, caractérisée en ce que les moyens d'accumulation et de stockage temporaire de pâte (14) sont formés par une zone d'extrémité de sortie de pâte des moyens de production (1).

9. Installation selon l'une quelconque des revendications 1 à 7, caractérisée en ce que les moyens d'accumulation et de stockage temporaire de pâte (14) sont formés par des moyens thermorégulés formant réservoir de stockage (15), disposés à l'extrémité de sortie des moyens de production (1) et dont l'entrée est raccordée à la sortie de ces moyens de production et dont la sortie comporte des moyens d'obturation (16), raccordés à des moyens de commande de ceux-ci à l'ouverture et à la fermeture.

10. Installation selon la revendication 9, caractérisée en ce que les moyens formant réservoir de stockage de pâte (15) comprennent une première partie de réservoir (17) dont une première extrémité forme l'entrée de ceux-ci raccordée aux moyens de production (1) et dont une seconde extémité forme la sortie de ceux-ci, munie des moyens d'obturation (16) et une seconde partie de réservoir (18) s'étendant à partir de la première (17) et dans laquelle sont disposés des moyens (19) de compactage/éjection de pâte.

11. Installation selon la revendication 10, caractérisée en ce que les moyens de compactage/éjection de pâte (19) comprennent un piston (20) monté déplaçable dans cette seconde partie de réservoir (18), ce piston comportant une tige (21) associée à des moyens (22) de contrôle du déplacement de celui-ci.

12. Installation selon la revendication 11, caractérisée en ce que les moyens (22) de contrôle comprennent des moyens de freinage du déplacement dans un sens du piston (20) lors de l'accumulation de pâte dans les moyens d'accumulation et de stockage temporaire et des moyens de déplacement du piston (20) dans l'autre sens pour l'éjection de la pâte hors des moyens d'accumulation et de stockage temporaire (14).

13. Installation selon la revendication 12, caractérisée en ce que les moyens de contrôle (22) sont associés à des capteurs de position du piston (20) dans la seconde partie de réservoir (18) et à des moyens de commande de leur fonctionnement.

14. Installation selon la revendication 11,12 ou 13, caractérisée en ce que les moyens de contrôle comportent un vérin (22).

15. Installation selon l'une quelconque des revendications précédentes, caractérisée en ce que les moyens d'accumulation et de stockage temporaire de pâte (14) comprennent une soupape de trop-plein (25).

16. Installation selon la revendication 15, caractérisée en ce que la soupape de trop-plein (25) est prévue sur la seconde partie de réservoir (18).

17. Installation selon l'une quelconque des revendications 9 à 16, caractérisée en ce que des moyens de chauffage (23,24) sont disposés autour de chaque partie (17,18) des moyens formant réservoir.

18. Installation selon l'une quelconque des revendications précédentes, caractérisée en ce que l'orifice de chargement/déchargement (28) de pâte des moyens en forme de seringue (27) est associé à des moyens d'obturation (30) de celui-ci, dont l'ouverture et la fermeture sont contrôlées par des moyens de commande.

19. Installation selon la revendication 18, caractérisée en ce que les moyens d'obturation (30) comprennent un obturateur de découpe de pâte.

20. Installation selon l'une quelconque des revendications précédentes, caractérisée en ce que les moyens en forme de seringue (27) comprennent un corps de seringue (31) dont une extrémité comporte l'orifice de chargement/déchargement (28), et dans lequel sont disposés des moyens (33) de compactage/éjection de pâte.

21. Installation selon la revendication 20, caractérisée en ce que les moyens de compactage/éjection de pâte comprennent un piston (34) monté déplaçable dans le corps de seringue (31), ce piston comportant une tige (35) associée à des moyens de contrôle (36) du déplacement de celui-ci.

22. Installation selon la revendication 21, caractérisée en ce que les moyens de contrôle (36) comprennent des moyens de freinage du déplacement dans un sens du piston (34) lors du chargement de pâte dans les moyens en forme de seringue (27) et des moyens de déplacement du piston (34) dans l'autre sens pour le déchargement de la pâte hors de ces moyens en forme de seringue (27).

23. Installation selon la revendication 21 ou 22, caractérisée en ce que les moyens de contrôle sont associés à des capteurs de position du piston (34) dans le corps de seringue et à des moyens de commande de leur fonctionnement.

24. Installation selon la revendication 21, 22 ou 23, caractérisée en ce que les moyens de contrôle comprennent un vérin (36).

25. Installation selon l'une quelconque des revendications précédentes, caractérisée en ce que des moyens de chauffage (32) sont disposés autour des moyens en forme de seringue (27).

26. Installation selon l'une quelconque des revendications précédentes, caractérisée en ce que les moyens de manutention comprennent au moins un robot (38) de manutention muni d'un bras (40) de déplacement, à l'extrémité duquel sont placés les moyens en forme de seringue (27) et dont le fonctionnement est piloté par des moyens de commande pour déplacer ces moyens entre les première et seconde positions de ceux-ci.

27. Installation selon l'une quelconque des revendications précédentes, caractérisée en ce que le moule est un moule d'injection dans lequel est injectée sous pression la pâte.

28. Installation selon l'une quelconque des revendications 1 à 26, caractérisée en ce que le moule est un moule de compression (29) comprenant une matrice (41) sur laquelle est déposée la pâte sous la forme d'un cordon et un poinçon (42) correspondant.

29. Installation selon la revendication 28, caractérisée en ce que la matrice (41) comporte des moyens (44) d'immobilisation temporaire du cordon de pâte déposé.

30. Installation selon la revendication 29, caractérisée en ce que les moyens (44) d'immobilisation du cordon de pâte sont déplaçables entre une position active d'immobilisation et une position escamotée.

31. Installation selon la revendication 30, caractérisée en ce que les moyens d'immobilisation comprennent des aiguilles (44) traversant des trous correspondants de la matrice (41) et faisant saillie, en position active, au-dessus de la surface de celle-ci lors du dépôt du cordon de pâte et une position escamotée dans la matrice (41).

32. Installation selon la revendication 31, caractérisée en ce que les aiguilles (44) sont portées par une plaque de support (45) déplaçable sous la matrice (41) par des moyens de manoeuvre, associés à des moyens de commande.

33. Installation selon l'une quelconque des revendications précédentes, caractérisée en ce qu'elle comporte des moyens de maintien des moyens de production, des moyens d'accumulation et de stockage temporaire de pâte et des moyens de prélèvement et d'introduction, sous une atmosphère contrôlée de gaz inerte.

34. Installation selon la revendication 33, caractérisée en ce que le gaz inerte est de l'azote.

35. Installation selon l'une quelconque des revendications précédentes, caractérisée en ce qu'elle comporte une unité centrale (50) de pilotage du fonctionnement des moyens de production, d'accumulation et de stockage temporaire, de prélèvement et d'introduction et du moule.

36. Installation selon la revendication 17 ou 25, caractérisée en ce que les moyens de chauffage comprennent des résistances électriques dont l'alimentation est contrôlée pour réguler la température.

## Claims

1. Apparatus for manufacturing structural parts made of fibre-reinforced thermoplastic materials, notably for motor vehicles, comprising:
means (1) for continuously producing a paste of a mixture of fibre-reinforced thermoplastic materials, into which are fed, on the one hand, the thermoplastic materials (4) and, on the other hand, the reinforcing fibres (6),
means (14) for collecting and temporarily storing the paste produced; and
means (26) for taking paste from the collection and temporary storage means (14) and introducing this paste into a mould (29) for forming the part,
characterised in that the means (26) for taking and introducing the paste comprise thermoregulated means in the form of a syringe (27) comprising at least one paste loading/unloading port (28), said means being carried by handling means (30) and movable between a first paste loading position, in which the paste loading/unloading port (20) of the syringe-shaped means (27) is opposite the outlet from the paste collection and temporary storage means (14), to enable the paste to be transferred from said collection and temporary storage means (14) into the syringe-shaped means (27) and a second position in which the paste loaded in these means is introduced into the mould (29) for forming the part.

2. Apparatus according to claim 1, characterized in that the means (1) for continuously producing the paste comprise a thermoregulated extruder (2) into which the thermoplastic material is fed at a first inlet (3) and the reinforcing fibres are fed at a second inlet (5).

3. Apparatus according to claim 2, characterised in that the extruder (2) comprises an elongated sleeve (7) in which there are at least two parallel and embricated screws (8) associated with rotary drive means the sleeve having ports (9, 10) for the introduction of the thermoplastic material and reinforcing fibres, associated with feed hoppers (11, 12).

4. Apparatus according to claim 2 or 3, characterised in that the extruder (2) had degassing means.

5. Apparatus according to any one of the proceding claims, characterised in that the thermoplastic material is polypropylene.

6. Apparatus according to any one of the preceding claims, characterised in that the reinforcing fibres are mineral fibres.

7. Apparatus according to any one of claims 1 to 5, characterised in that the reinforcing fibres are organic fibres.

8. Apparatus according to any one of the preceding claims, characterised in that the paste collection and temporary storage means (14) are formed by a paste discharging end zone of the production means (1).

9. Apparatus according to any one of claims 1 to 7, characterised in that the paste collection and temporary storage means (14) consist of thermoregulated means forming a storage reservoir (15), arranged at the outlet end of the production means (1), the inlet of which is connected to the outlet of said production means and the outlet of which comprises closure means (16) connected to means for controlling the opening and closing of said means (16).

10. Apparatus according to claim 9, characterised in that the means (15) forming a paste storage reservoir comprise a first reservoir portion (17), a first end of which forms the inlet of said means (15) connected to the production means (1) and a second end of which forms the outlet of said means (15), provided with the closure means (16), and a second reservoir portion (18) extending from the first (17) and in which are located means (19) for compacting/ejecting paste.

11. Apparatus according to claim 10, characterised in that the means (19) for compacting/ejecting paste comprise a piston (20) mounted so as to be displaceable in this second reservoir portion (18), this piston comprising a rod (21) associated with means (22) for controlling the displacement thereof,

12. Apparatus according to claim 11, characterised in that the control means (22) comprise means for slowing down the movement in one direction of the piston (20) during the collection of paste in the collection and temporary storage means and means for moving the piston (20) in the other direction in order to eject the paste from the collection and temporary storage means (14).

13. Apparatus according to claim 12, characterized in that the control means (22) are associated wish means for sensing the position of the piston (20) in the second reservoir portion (18) and means for controlling their operation.

14. Apparatus according to claim 11, 12 or 13, characterised in that the control means comprise a jack (22).

15. Apparatus according to any of the preceding claims, characterised in that the paste collection and temporary storage means (14) comprise an overflow valve (25).

16. Apparatus according to claim 15, characterised in that the overflow valve (25) is provided on the second reservoir portion (18).

17. Apparatus according to any one of claims 9 to 16, characterized in that heating means (23, 24) are arranged round each portion (17, 18) of the reservoir means.

18. Apparatus according to any one of the preceding claims, characterised in that the paste loading/unloading port (28) of the syringe-shaped means (27) is associated with closure means (30) therefor, the opening and closing of which are controlled by control means.

19. Apparatus according to claim 18, characterised in that the closure means (30) comprise a paste cutting closure.

20. Apparatus according to any one of the preceding claims, characterised in that the syringe-shaped means (27) comprise a syringe body (31) one end of which comprises the loading/unloading port (28) and wherein means (33) for compacting/ejecting the paste are located.

21. Apparatus according to claim 20, characterised in that the paste compacting/ejecting means comprise a piston (34) displaceably mounted in the syringe body (31), this piston comprising a rod (35) associated with means (36) for controlling the displacement thereof.

22. Apparatus according to claim 21, characterised in that the control means (36) comprise means for slowing down the movement in one direction of the piston (34) during the loading of paste into the syringe-shaped means (27) and means for moving the piston (34) in the other direction for discharging the paste from these syringe-shaped means (27).

23. Apparatus according to claim 21 or 22, characterised in that the control means are associated with means for detecting the position of the piston (34) in the syringe body and with means for controlling their operation.

24. Apparatus according to claim 21, 22 or 23, characterised in that the control means comprise a jack (36).

25. Apparatus according to any one of the preceding claims, characterized in that the heating means (32) are located around the syringe-shaped means (27).

26. Apparatus according to any one of the proceding claims, characterised in that the handling means comprise at least one handling robot (38) provided with a moving arm (40) at the end of which are situated the syringe-shaped means (27) and the operation of which is controlled by control means for moving said means between their first and second positions.

27. Apparatus according to any one of the preceding claims, characterised in that the mould is an injection mould into which the paste is injected under pressure.

28. Apparatus according to any one of claims 1 to 26, characterised in that the mould is a compression mould (29) comprising a die (41) on which the paste is placed in the form of a ribbon, and a corresponding punch (42).

29. Apparatus according to claim 28, characterised in that the die (41) comprises means (44) for temporarily immobilising the ribbon of paste placed thereon.

30. Apparatus according to claim 29, characterised in that the means (44) for immobilizing the ribbon of paste are movable between an active immobilising position and a retracted position.

31. Apparatus according to claim 30, characterised in that the immobilizing means comprise pins (44) passing through corresponding holes in the die (41) and projecting, in the active position, above the surface thereof while the ribbon of paste is being deposited thereon and a retracted position in the die (41).

32. Apparatus according to claim 31, characterised in that the pins (44) are carried by a support plate (45) which is movable underneath the die (41) by manoeuvring means associated with control means.

33. Apparatus according to any one of the preceding claims, characterised in that it comprises means for holding the production means, the collection and temporary storage means for the paste and the means for taking and introducing the paste, under a controlled inert gas atmosphere.

34. Apparatus according to claim 33, characterised in that the inert gas is nitrogen.

35. Apparatus according to any one of the preceding claims, characterized in that it comprises a central unit (50) for controlling the operation of the production means, the paste collection and temporary storage means and the means for taking and introducing the paste, and the mould.

36. Apparatus according to claim 17 or 25, characterised in that the heating means comprise electrical resistors the current supply to which is controlled in order to regulate the temperature.

## Patentansprüche

1. Vorrichtung zur Herstellung von Bauteilen aus faserverstärktem thermoplastischen Kunststoff, insbesondere für Kraftfahrzeuge, aufweisend;
- Eine Einrichtung (1) zur kontinuierlichen Erzeugung einer Masse aus einem Gemisch von faserverstärktem, thermoplastischen Kunststoff, die an einem Einlaß einerseits den thermoplastischen Kunststoff (4) und andererseits die Verstärkungsfasern (6) aufnimmt,
- eine Einrichtung (14) zur Ansammlung und vorübergehenden Bevorratung der erzeugten Masse; und
- eine Einrichtung (26) zum Entnehmen der Masse aus der Einrichtung (14) zur Ansammlung und vorübergehenden Bevorratung und zum Einleiten dieser entnommenen Masse in eine Form (29) zur Ausbildung des Teils,
dadurch gekennzeichnet, daß die Einrichtung (26) zum Entnehmen und Einleiten der Masse eine wärmegeregelte Einrichtung (27) in Form einer Spritze umfaßt, welche zumindest eine Öffnung (28) zum Ein/Austragen der Masse umfaßt, die durch eine Fördereinrichtung (38) getragen und zwischen einer ersten Masse-Eintragposition, in welcher die Masse-Ein/Austragöffnung (28) der Einrichtung in Form einer Spritze (27) dem Auslaß der Einrichtung (14) zur Ansammlung und vorübergehenden Bevorratung der Masse gegenüberliegt, um die Übertragung der Masse von dieser Einrichtung (14) zur Ansammlung und vorübergehenden Bevorratung in die Einrichtung (27) in Form einer Spritze zu ermöglichen, und einer zweiten Position zur Einleitung der in diese Einrichtung eingetragenen Masse in die Form (29) zur Ausbildung des Teils verstellbar ist.

2. Vorrichtung nach Anspruch 1, dadurch gekennzeichnet, daß die Einrichtung (1) zur kontinuierlichen Erzeugung der Masse eine wärmegeregelte Strangpreßmaschine (2) umfaßt, die an einem ersten Einlaß (3) den thermoplastischen Kunststoff und an einem zweiten Einlaß (5) die Verstärkungsfasern aufnimmt.

3. Vorrichtung nach Anspruch 2, dadurch gekennzeichnet, daß die Strangpreßmaschine (2) eine längliche Gleithülse (7) umfaßt, in welcher zumindest zwei parallele und sich überlappende Schnecken (8) angeordnet sind, denen eine Drehantriebseinrichtung zugeordnet ist, wobei die Gleithülse Öffnungen (9, 10) zum Einleiten des thermoplastischen Kunststoffs und der Verstärkungsfasern aufweist, denen Fülltrichter (11, 12) zugeordnet sind.

4. Vorrichtung nach Anspruch 2 oder 3, dadurch gekennzeichnet, daß die Strangpreßmaschine (2) eine Entgssungseinrichtung umfaßt.

5. Vorrichtung nach einem der vorangehenden Ansprüche, dadurch gekennzeichnet, daß es sich bei dem thermoplastischen Kunststoff um Polypropylen handelt.

6. Vorrichtung nach einem der vorangehenden Ansprüche, dadurch gekennzeichnet, daß es sich bei den Verstärkungsfasern um Mineralfasern handelt.

7. Vorrichtung nach einem der vorangehenden Ansprüche, dadurch gekennzeichnet, daß es sich bei den Verstärkungsfasern um organische Fasern handelt.

8. Vorrichtung nach einem der vorangehenden Ansprüche, dadurch gekennzeichnet, daß die Einrichtung (14) zur Ansammlung und vorübergehenden Bevorratung der Masse durch eine Endzone des Auslasses für die Masse der Erzeugungseinrichtung (1) gebildet ist.

9. Vorrichtung nach einem der Ansprüche 1 bis 7, dadurch gekennzeichnet, daß die Einrichtung (14) zur Ansammlung und vorübergehenden Bevorratung der Masse durch eine wärmeregulierte Einrichtung gebildet ist, die einen Bevorratungsbehälter (15) bildet, der an einem Ende des Auslasses der Erzeugungseinrichtung (1) angeordnet ist, und dessen Einlaß mit dem Auslaß der Erzeugungseinrichtung verbunden ist und dessen Auslaß eine Verschlußeinrichtung (16) umfaßt, die mit einer Steuereinrichtung zum Öffnen und Schließen derselben verbunden ist.

10. Vorrichtung nach Anspruch 9, dadurch gekennzeichnet, daß die Einrichtung (15), welche einen Bevorratungsbehälter für die Masse bildet, einen ersten Behälterteil (17) umfaßt, von welchem ein erstes Ende den Einlaß hierfür bildet, der mit der Erzeugungseinrichtung (1) verbunden ist, und von welchem ein zweites Ende einen Auslaß davon bildet, der mit einer Verschlußeinrichtung (16) versehen ist, und ein zweiter Behälterteil (18), der sich ausgehend von dem ersten Teil (17) erstreckt, und in welchem eine Einrichtung (19) zum Verdichten/Ausstoßen der Masse angeordnet ist.

11. Vorrichtung nach Anspruch 10, dadurch gekennzeichnet, daß die Einrichtung (19) zum Verdichten/Ausstoßen der Masse einen Kolben (20) umfaßt, der in dem zweiten Teil (18) des Behälters verschiebbar angebracht ist, wobei dieser Kolben eine Kolbenstange (21) umfaßt, die mit einer Einrichtung (22) zur Steuerung der Verschiebung verbunden ist.

12. Vorrichtung nach Anspruch 11, dadurch gekennzeichnet. daß die Steuereinrichtung (22) eine Einrichtung zum Abbremsen der Verschiebung in einer Richtung des Kolbens (20) bei Ansammlung der Masse in der Einrichtung zur Ansammlung und vorübergehenden ßevorratung und eine Einrichtung zur Verschiebung des Kolbens (20) in der anderen Richtung zum Ausstoßen der Masse aus der Einrichtung (14)zur Ansammlung und vorübergehenden Bevorratung umfaßt.

13. Vorrichtung nach Anspruch 12, dadurch gekennzeichnet, daß der Steuereinrichtung (22) Positionsfühler für den Kolben (20) in dem zweiten Behälterteil (18) des Behälters und eine Einrichtung zur Steuerung ihrer Arbeitsweise zugeordnet sind.

14. Vorrichtung nach Anspruch 11, 12 oder 13, dadurch gekennzeichnet, daß die Steuereinrichtung einen Stellantrieb (22) umfaßt.

15. Vorrichtung nach einem der vorangehenden Ansprüche, dadurch gekennzeichnet, daß die Einrichtung (14) zur Ansammlung und vorübergehenden Bevorratung der Masse ein Entlastungsventil (25) umfaßt.

16. Vorrichtung nach Anspruch 15, dadurch gekennzeichnet, daß das Enlastungsventil (25) auf dem zweiten ßehälterteil (18) vorgesehen ist.

17. Vorrichtung nach einem der Ansprüche 9 bis 16, dadurch gekennzeichnet, daß um jeden Teil (17, 18) der einen Vorratsbehälter bildenden Einrichtung herum eine Heizeinrichtung (23, 24) vorgesehen ist.

18. Vorrichtung nach einem der vorangehenden Ansprüche, dadurch gekennzeichnet, daß der Öffnung (28) zum Ein/Austragen der Masse der Einrichtung (27) in Form einer Spritze eine Verschlußeinrichtung (30) hierfür angeordnet ist, deren Öffnen und Schließen durch eine Steuereinrichtung gesteuert werden.

19. Vorrichtung nach Anspruch 18, dadurch gekennzeichnet, daß die Verschlußeinrichtung (30) ein Verschlußorgan zum Abschneiden der Masse umfaßt.

20. Vorrichtung nach einem der vorangehenden Ansprüche, dadurch gekennzeichnet, daß eine Einrichtung (27) in Form einer Spritze einen Spritzenkörper (31) umfaßt, dessen eines Ende die Ein/Austragöffnung (28) umfaßt, und in welchem die Einrichtung (33) zum Verdichten/Austragen der Masse angeordnet ist.

21. Vorrichtung nach Anspruch 20, dadurch gekennzeichnet, daß die Einrichtung zum Verdichten/Augstoßen der Masse einen Kolben (34) umfaßt, der in dem Spritzenkörper (31) verschiebbar angebracht ist, wobei dieser Kolben eine Kolbenstange (35) umfaßt, der eine Einrichtung (36) zur Steuerung der Verschiebung desselben zugeordnet ist.

22. Vorrichtung nach Anspruch 21, dadurch gekennzeichnet, daß die Steuereinrichtung (36) eine Einrichtung zum Abbremsen der Verschiebung in einer Richtung des Kolbens (34) beim Austragen der Masse in der Einrichtung (27) in Form einer Spritze und eine Einrichtung zur Verschiebung des Kolbens (34) in der anderen Richtung zum Austragen der Masse aus dieser Einrichtung (27) in Form einer Spritze umfaßt.

23. Vorrichtung nach Anspruch 21 oder 22, dadurch gekennzeichnet, daß der Steuereinrichtung Positionfühler für den Kolben (34) in dem Spritzenkörper und eine Steuereinrichtung für ihre Arbeitsweise zugeordnet sind.

24. Vorrichtung nach Anspruch 21, 22 oder 23, dadurch gekennzeichnet, daß die Steuereinrichtung einen Stellantrieb (36) umfaßt.

25. Vorrichtung nach einem der vorangehenden Ansprüche, dadurch gekennzeichnet, daß um die Einrichtung (27) in Form einer Spritze eine Heizeinrichtung (32) angeordnet ist.

26. Vorrichtung nach einem der vorangehenden Ansprüche, dadurch gekennzeichnet, daß die Fördereinrichtung zumindest einen Förder-Robotor (38) umfaßt, der mit einem Verschiebungsarm (40) an demjenigen Ende versehen ist, an welchem die Einrichtung (27) in Form einer Spritze angeordnet ist, und dessen Arbeitsweise durch eine Steuereinrichtung gesteuert ist, um diese Einrichtung zwischen ihren ersten und zweiten Positionen zu verschieben.

27. Vorrichtung nach einem der vorangehenden Ansprüche, dadurch gekennzeichnet, daß die Form eine Spritzform ist, in welche die Masse unter Druck eingespritzt wird.

28. Vorrichtung nach einem der Ansprüche 1 bis 26, dadurch gekennzeichnet, daß die Form eine Preßform (29) ist, die eine Matrize (41) umfaßt, auf welcher die Masse in Form einer Raupe abgeschieden ist, und einen entsprechenden Stempel (42).

29. Vorrichtung nach Anspruch 28, dadurch gekennzeichnet, daß die Matrize (41) eine Einrichtung (44) zum vorübergehenden Stillsetzen der abgeschiedenen Massenraupe umfaßt.

30. Vorrichtung nach Anspruch 29, dadurch gekennzeichnet, daß die Einrichtung (44) zum Stillsetzen der Massenraupe zwischen einer aktiven Position zum Stillsetzen und einer eingezogenen Position verstellbar ist.

31. Vorrichtung nach Anspruch 30, dadurch gekennzeichnet, daß die Einrichtung zum Stillsetzen Nadeln (44) umfaßt, welche entsprechende Löcher der Matrize (41) durchsetzen und in aktiver Position über der Oberseite derselben beim Abscheiden der Massenraupe vorspringen und eine eingefahrene Position in der Matrize (41) einnehmen.

32. Vorrichtung nach Anspruch 31, dadurch gekennzeichnet, daß die Nadeln (44) durch eine Tragplatte (45) getragen sind, die unter der Matrize (41) durch eine Betätigungseinrichtung verstellbar ist, welcher eine Steuereinrichtung zugeordnet ist.

33. Vorrichtung nach einem der vorangehenden Ansprüche, dadurch gekennzeichnet, daß sie eine Einrichtung zum Halten der Erzeugungseinrichtung, der Einrichtung zur Ansammlung und vorübergehenden Bevorratung der Masse und der Einrichtung zum Entnehmen und Einleiten in gesteuerter Inertgasatmosphäre umfaßt.

34. Vorrichtung nach Anspruch 33, dadurch gekennzeichnet, daß es sich bei dem Inertgas um Stickstoff handelt.

35. Vorrichtung nach einem der vorangehenden Ansprüche, dadurch gekennzeichnet, daß sie eine Zentraleinheit (50) zum Steuern der Arbeitsweise der Erzeugungseinrichtung, der Einrichtung zur Ansammlung und vorübergehenden Bevorratung, der Einrichtung zum Entnehmen und Einleiten und der Form umfaßt.

36. Vorrichtung nach Anspruch 17 oder 25, dadurch gekennzeichnet, daß die Heizeinrichtung elektrische Widerstände umfaßt, deren Stromversorgung zum Regeln der Temperatur gesteuert ist.
